# EUROPEAN PATENT APPLICATION

(11) **EP 2 154 647 A1**
(43) Date of publication of application: **17.02.2010**
(21) Application number: 08290768.4
(22) Date of filing: 11.08.2008
(51) Int. Cl.: G06Q 99/00, G06Q 10/00

(54) **Method and arrangement for user controlled quality of experience assignment between services**

(71) Applicant: Alcatel Lucent, 75008 Paris (FR)
(72) Inventor: De Schepper, Koen, 2650 Edegem (BE); Hublet, Christian, 9080 Lochristi (BE)
(74) Representative: Vandenbroeck, Josiane Anne Marie

(57) **Abstract**

A Quality of experience optimizer (QOEO) for dynamically controlling the quality of a plurality of applications (app1,app2,...,appn) available to an end user via a communications network (GN), is adapted to collect information from said applications (app1,app2,...,appn) related to the actual status of said applications and of the flows (flow1,flow2,...,flown) associated associated to said applications, to report the actual status of said applications and said associated flows via a user interface (UI) of said optimizer (QOEO) to said user, to accept inputs from said user concerning a desired relative priority of at least one of said applications, and to change the flow of said at least one of said applications in accordance with said desired relative priority . Optionally information with respect to billing can be further used to change the flow.

## Description

The present invention relates to user controlled quality of experience share assignment between services.

Today a user has only limited dynamic impact on the quality distribution between services that are delivered to him or her. Most of the existing schemes involve operator defined quality priority and reservation schemes, which are assumed to be preferred by the users. Such solutions that are available comprise blocking of services that a user wants to add, based on a first come, first serve policy. Yet other methods apply fixed priority schemes, leaving the lower priority service with quality penalty.

Other existing methods imply a competition for the resources, resulting in equal or uncontrolled weighted sharing of the resources. Still other existing methods allow for a user controlled termination of one or more services to thereby free resources for another more preferred service. Scalable (stepwise or gradual) flow control of one service in favour of lower priority services is known as well. Even some indication and tuning of a preferred quality via a button, by the user is possible, as is indicated in the published European Patent application EP 1 178 635 A1. A user is thereby enabled to make a choice in favour of one of two active communications, whereby the bandwidth left for the other application used by the same user, will be adapted accordingly.

However, there is no provision foreseen for a user to actively coordinate the control on priority over several applications using a shared network segment. In the prior art document a user will tune the priority of one application by means of the quality button, based on end-user quality experience, but this user does not know how far he/she can go in this respect, and/or whether or not there is still enough bandwidth available for doing this.

An object of the present invention is therefore to provide a method and arrangement for solving these problems.

According to the invention, this object is achieved by the method including the steps as described in claim 1, and realized by means of a arrangement in accordance with claim 5.

In this way, by first providing a complete overview to the user of the status of all the applications in use or subscribed to, a user will get a complete and clear overview of all relevant services in use, which will consequently enable him or her to easily adapt or change the relative or absolute priority or priorities of one or more of the running applications or services. A user may thereupon interact such as to adapt some of these priorities, upon which step the relevant flows will be adapted.

Similarly if a group of users are sharing the same resources for the applications, a dynamic control will be provided to optimize the service delivery for the group of users. Optimization of the service delivery for a household with multiple members of the household simultaneously running applications can thus be obtained.

Other characteristic features of the present invention are described in the appended claims.

The above and other objects and features of the invention will become more apparent and the invention itself will be best understood by referring to the following description of an embodiment taken in conjunction with the accompanying drawings wherein:
Fig. 1 represents a basic scheme of a quality of experience optimizer arrangement according to the invention,
Fig. 2a shows a possible way the applications are presented to a user,
Fig. 2b shows how a user can adapt the priorities in the example shown in Fig. 2a,
Fig. 2c shows the result after the user adaptations as shown in Fig. 2b,
Figs. 3-5 show different embodiments of a quality of experience optimizer of Fig. 1,
Fig. 6 shows another scheme of a quality of experience optimizer according to the invention.

In the claims hereof any element expressed as a means for performing a specified function is intended to encompass any way of performing that function. This may include, for example, a) a combination of electrical or mechanical elements which performs that function or b) software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

The present invention relates to a method and quality of experience optimizer to allow for an easy interaction between an end user and this optimizer to control the quality of the applications which are available for this end-user. This method and device is independent of the network type itself and can thus as well be applicable in fixed (cable, DSL, optical fibre,..) and mobile networks (GSM, UMTS, CDMA, HSDPA, WIMAX, wifi, satellite).

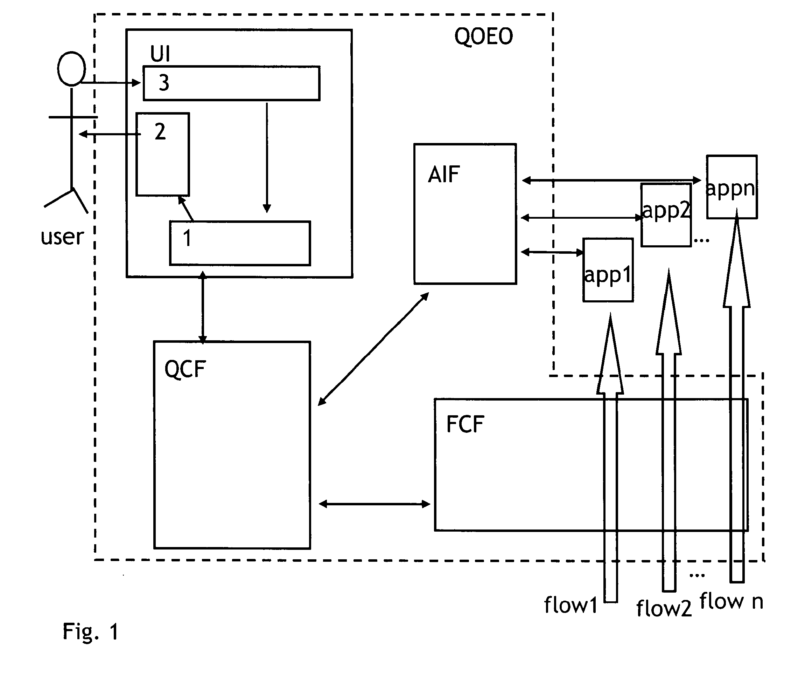

In this respect a quality of experience optimizer QOEO, in one schematic embodiment depicted in Fig. 1 including 4 main functional blocks is presented. However other embodiments exist without a clear distinction between these 4 blocks; in these other embodiments the hereafter described functionalities are all performed by one or more devices, or are added as additional functional entities and distributed over several devices, such as an existing user interface, an existing access router etc. as will also be referred to in later parts of this description. For the ease of explanation we will start with describing the embodiment as depicted in Fig. 1 wherein the functions of the quality of experience optimizer are grouped within 4 main functional modules.

A first functional block comprises a user interface module. User-interfaces are well known and currently present in most end-user devices, sometimes in very simple embodiments such as an on/off button, sometimes in a very sophisticated embodiment with a display and input means such as a keyboard or touch screens etc. A user interface module in accordance to the present invention, has to be able to perform some extra special functions, as shown in Fig. 1. This User interface module UI includes means for communicating 1 with a quality control function module QCF, which is a second one of the 4 building blocks of the quality of experience optimizer embodiment. This module will be described in a next paragraph. The means of communicating 1 with this quality control function module is adapted to receive from this quality control function module information related to the status of the different services and applications in use by the user and/or available to the user. Furthermore this user interface module UI includes means for representing 2 (either in visual, but also possible in oral or tactile or other observable form) to the user, the status of these applications. Moreover this user interface has means 3 such as a touch screen, a keyboard, some voice recognition devices, inputs received via a mouse button,...,for receiving inputs from this user, which inputs may indicate whether or not a user wants to have a view of these applications available to him, and/or how a user wants to change the relative priorities and/or interactions of these different applications. The means for communicating 1 with the quality control function is therefore also further adapted to receive this user-information from the means 3 for receiving user inputs , and to further communicate this information back to the quality control function module QCF which will accordingly process these inputs from the user.

The quality control function module QCF is adapted to communicate with the user interface module in the already explained way, and further includes means for communicating with an application info function module AIF and with a flow conditioning function module FCF, which operations will now be further explained. It is to be remarked that all communications between these different modules and which will be referred to in the next paragraphs will be represented by means of one or two-sided arrows as represented in Fig. 1 between these different modules.

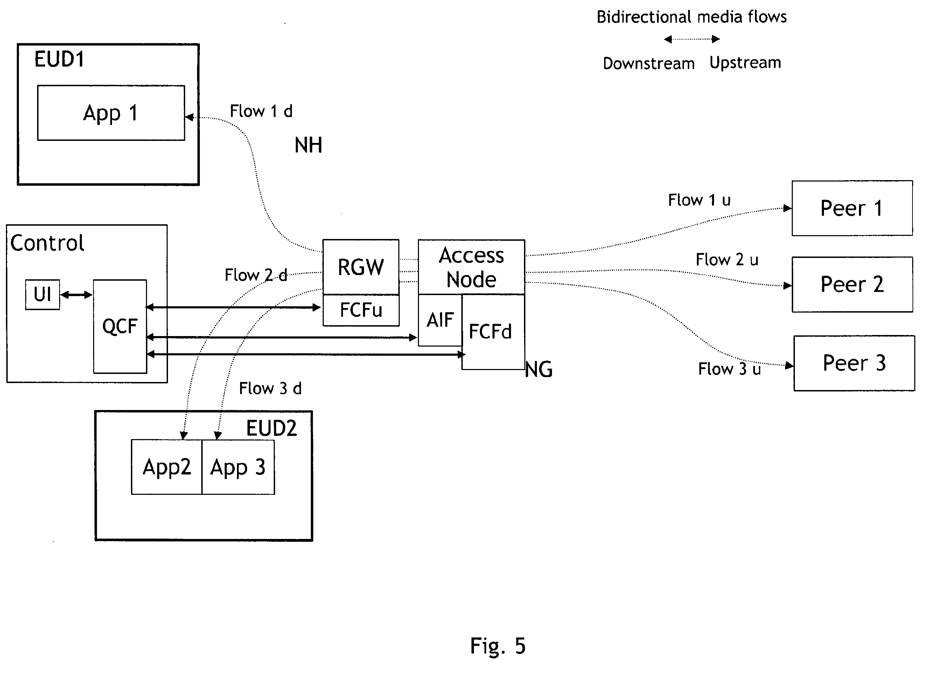

In a first mode of operation of this embodiment of the QOEO a user will inform the Quality control Function module QCF via the user interface UI that he/she would like to have an overview of these available applications. This can be done via means 3 for receiving user inputs, which will further pass this request towards the means 1 for communicating with the quality control function module. Upon receipt of this information the Quality control function QCF will retrieve, from the application info function module AIF a list of available applications/services and their associated flow specific information. By way of example the available applications can be a video application, as well as a telephone and Internet application - and the associated flow specific information may comprise the end-to-end IP addresses, protocol and ports information. This information may be available from the different applications, as is depicted in the embodiment of Fig. 1, and in that case the application info function module AIF will then communicate with the different applications, as is indicated by means of the two-sided arrows between the AIF and n applications appl to appn on Fig. 1. In this way the AIF module will collect this information and provide this to the quality control function module QCF. However in other embodiments the Application info function module is able to retrieve this application information not directly from the applications itself, but via other methods. This will be discussed in a further paragraph, for instance in relation to the embodiment shown in Fig. 5.

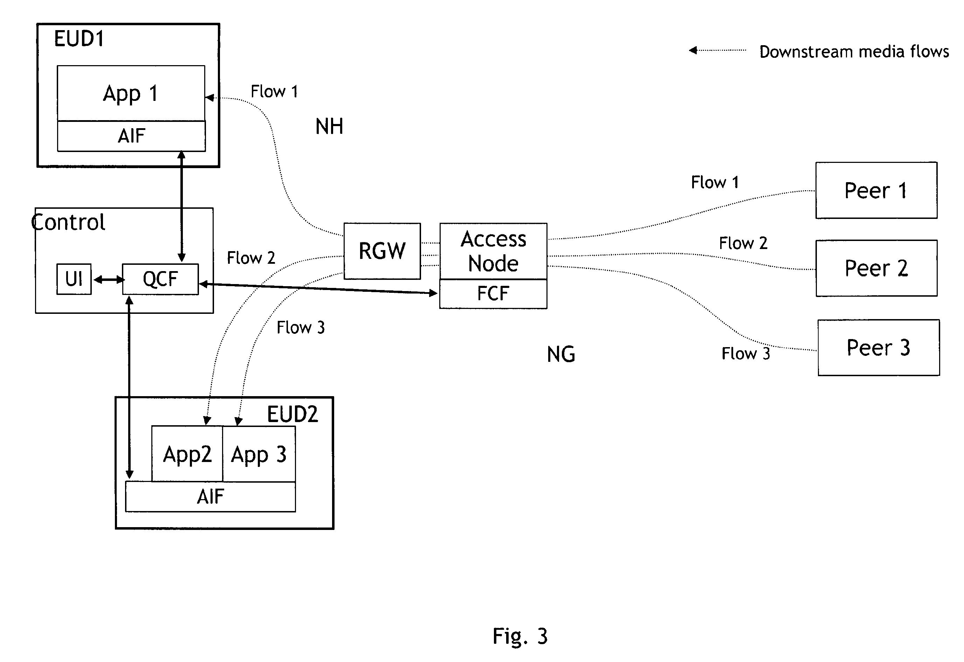

In any case, the quality control function module QCF will then contact a flow conditioning function module FCF with a request for information concerning the specific flows or bitstreams associated with these applications. The flow specific information of the different applications is therefore also provided by the QCF, to the flow conditioning function module FCF. In some embodiments , as these in Fig. 3 or 5 which will be described in a further paragraph, this FCF module will be part of one or more concentrator devices via which these different flows , linked to the applications the QOEO will be able to show and influence, will pass. For upstream home appliances such a concentrator device may be a modem or an in-house router; for downstream home appliances such a concentrator device may be the last-mile access node. The quality of experience optimizer is as well suited for optimizing flows, based on user inputs, where one end-user can "compete" with several others. In that case the concentrator device can again be such a network access device such as a DSLAM for wired access, or a base station in case of mobile access, a wireless router in case of WIFI or WIMAX Access Service Network gateway.

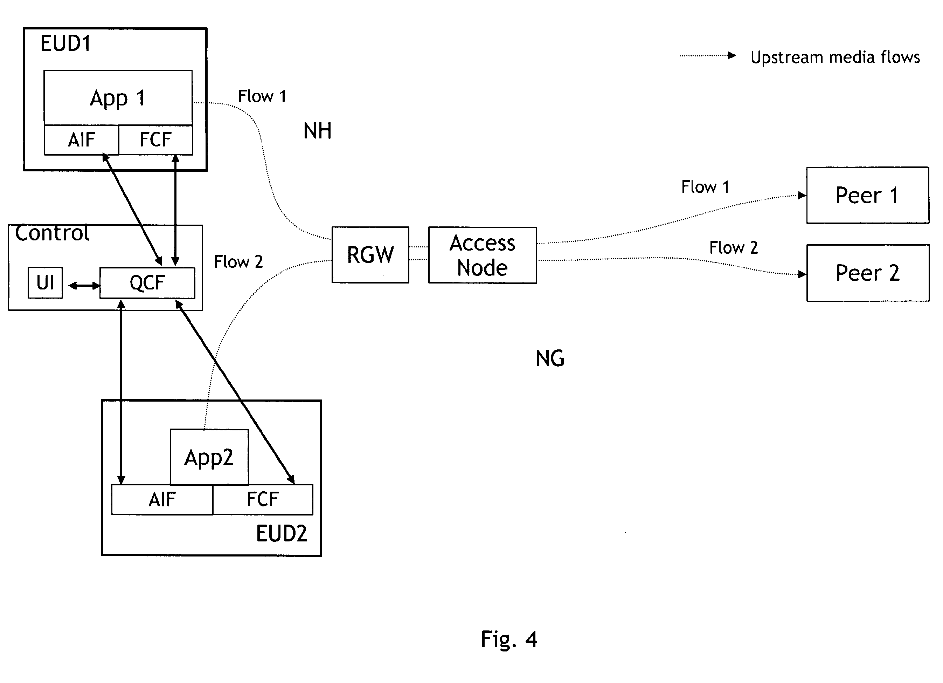

In other embodiments, the FCF module is included in an end-user device, as is for instance the case in the embodiment of Fig. 4 which will also be further described in a later paragraph.

In Fig. 1 the different flows are depicted by the thick hollow arrows flow 1 to flow n, flowing through the flow conditioning function module FCF.

This Flow conditioning function module FCF is thus adapted to receive the request for flow information with the accompanying flow specific info from the quality control function module QCF, and will thereupon be able to obtain this information by standard procedures e.g. by monitoring all its incoming/outgoing flows, and by deriving from that information such as consumed bandwidth, relative priority, absolute priority, available bandwidth, active filter information, as is generally known by a person skilled in the art. This flow information is communicated back to the quality control function module QCF. All communications between the QCF and the FCF are indicated on Fig. 1 by means of the double-sided arrow between both modules.

The QCF takes the flow information from the FCF, merges this with the application level information from the AIF and adapts it to have a human friendly presentation to the end user. Such a format may comprise a user-understandable way of the application (e.g. video, telephone, internet access), together with an indication of the absolute or relative bandwidth consumption, or a combination of both. This information is provided to the user interface which can further process this information to get it adapted to the format of the physical end-user device where the user-interface is applied. So in case of a television the user interface can further process this information to provide it in a diagram form for visual presentation; in case of an audio device, the user-interface can process this information to provide it into an audible form etc. In an embodiment a presentation as a list of services will be generated at an abstraction level understandable for the end user. Such higher level abstraction names are used to indicate the service to be impacted at the instance of the service. Moreover information that is not relevant for the end user in terms of irrelevant flows or flows he is not allowed to impact may be filtered out. In general the user-interface module UI can therefore comprise an additional module to modify the information from the quality control function module QCF into the desired physical format and/or presentation for final output to a user.

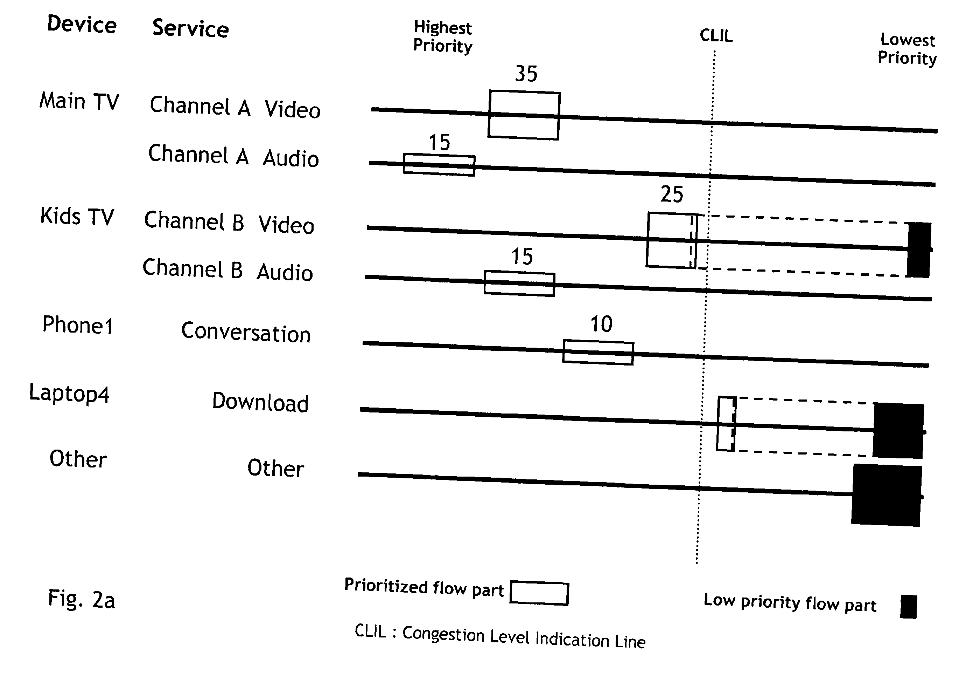

An example of a visual presentation of this information is shown in Fig. 2a. In this figure flows are presented as rectangles of a certain length and width. Sometimes the rectangles are split into a white part and a black part, the white part indicating that this part of the flow has a higher priority, the black part indicating that the other part of the flow has a lower priority. This priority could be set by the service provider or could be a result of a previous quality improvement action of the end user. For the prioritized parts, the height of the rectangle is related to the percentage of total allowed bandwidth this particular flow is consuming. As can be noticed from the Fig. 2a, the main TV, Channel A video is consuming 35%, main TV Channel A audio 15%, a part of KidsTV channel B video occupies 25% (the other part does not get through as this has lower priority), whereas ChannelB audio of that TV occupies 15%, a phone conversation consumes 10%. Although in this example a download activity on a laptop has some priority, it does not get through, as the total available bandwidth is already consumed. To highlight this a congestion level indication line CLIL is present; all flows which are presented at the right hand side of this line will not get through (or share a small reserved amount of lowest priority traffic).

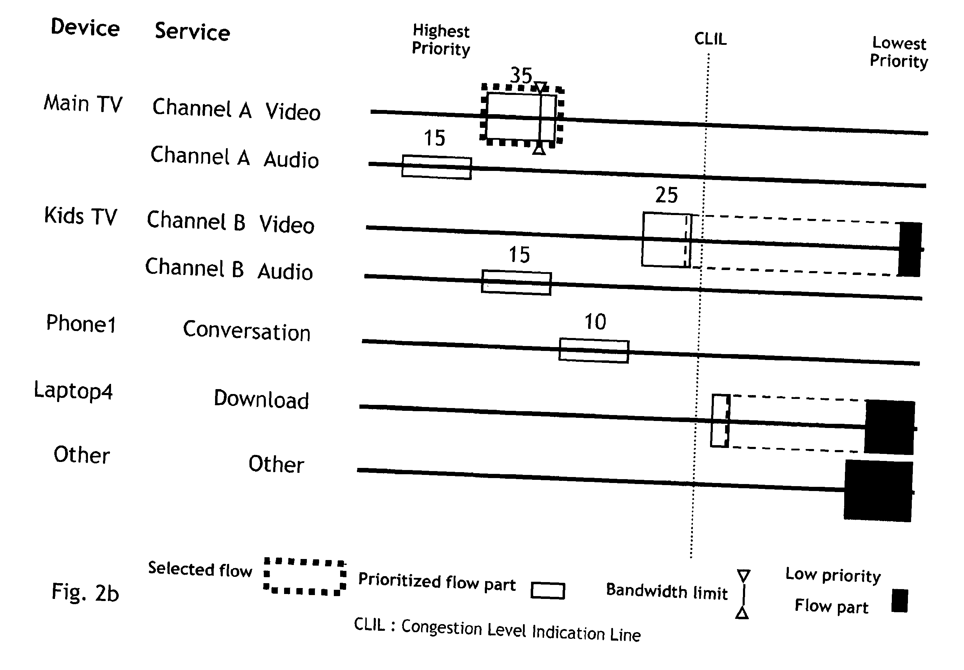

In case the user, upon receiving this information, desires to modify the relative priorities of the displayed or presented applications, this user will provide his or her preferences back to the user interface module UI, as already mentioned. In case of the example depicted in Fig. 2a, the user might want to increase the priority of the download flow on the laptop, by simultaneously reducing part of the priority of the flow of channel A video. This is shown in Fig. 2b wherein the bandwidth of this selected flow can be reduced by moving a marker related to a bandwidth limit to this rectangle, indicating that a part of the flow will have to be treated with the lowest priority.

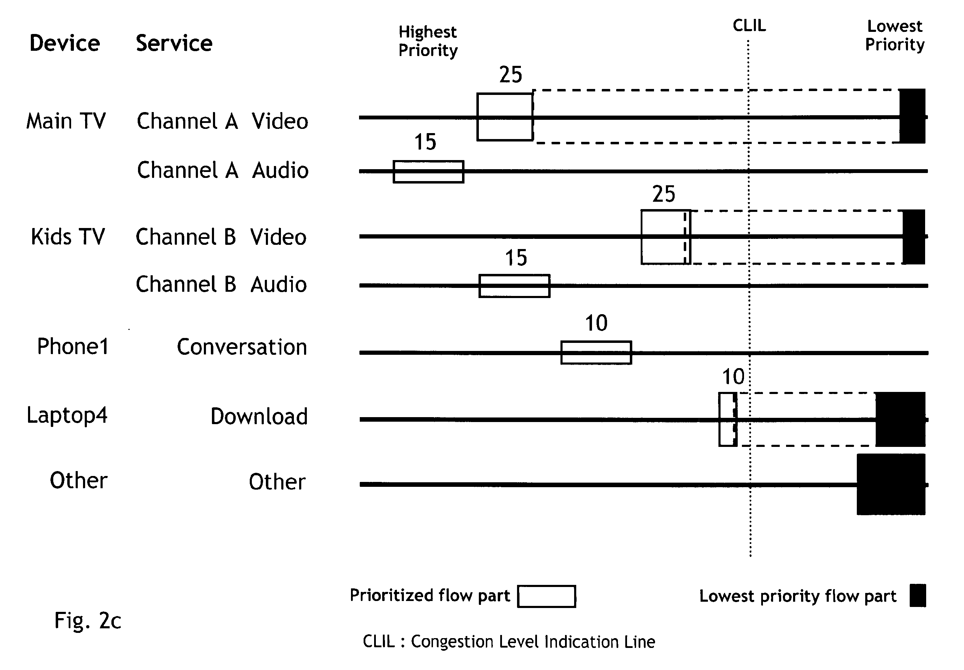

This information is provided to the quality control function module QCF, which will again modify this user-information into a lower-layer language format understandable by the flow conditioning function module FCF. In some embodiments the quality control function QCF may need to further calculate control parameters for further delivery to the flow conditioning function module FCF. The flow conditioning function module will, upon receipt of these control parameters, adapt the flows, based on these control parameters. This can be done using standard procedures such as common Diffserv procedures. Fig. 2c shows how the flows will be adapted, for the example of Fig. 2b. The user-interface will now display that the Channel A video will be split into two parts : a prioritized flow, consume 25% of the total bandwidth and another part which will now be transmitted with the lowest priority. As a result of this change, the congestion level indication will also move to the right in this presentation, as there will now be enough bandwidth to enable the prioritized part of the download to get through.

In case all flows are initially best effort, the arrangement will measure which flows get through and which not. This will determine the starting position on the screen for an example like the one in Fig. 2a, with the difference that all flows will be shown by black rectangles as no priority is given by an operator or end-user. One flow might (uncontrolled-best effort) consume more resources than another one, and a user can then again intervene by changing the relative importance to influence the bandwidth consumption as in the case shown on Figs. 2b-2c.

In general the AIF presents information on the possible methods to reduce or increase the used bandwidth (or network resources) that can be used by Flow control functions and the level of quality of experience impact that they will have. Depending on the available flow control mechanisms the QCF can decide what is the optimal method of improving/reducing the quality of experience for the user.

Further explanations will now be given for more specific detailed embodiments, depicted in figs. 3 to 5. These figures show only the 4 main functional modules of the QOEO, in order not to overload the drawings.

The quality of experience optimizer of Fig. 3 is adapted to show and influence the applications available in an in-house network. This network is shown on Fig. 3 by the left cloud denoted NH, in which 3 applications are active on 2 end-user devices EUD1 and EUD2. Application 1 may for instance be a video streaming application, active on a TV set, Application 2 may be another video streaming application, active on a computer, and application 3 may be yet another video streaming session on the same computer. Both the TV set and the computer are part of the same home network. The first application is delivered by a first provider, indicated as Peer 1. The second application by another one, indicated by Peer 2, and the third one by yet another one, indicated by peer 3. The flows associated to these applications are indicated as well, being flow 1 to flow 3, as indicated by the dotted bent arrows from peer1 to App1 on EUD1, from peer2 to App2 on EUD2, and from Peer3 to App3 on EUD2 respectively. Starting from the peers, these flows have to first pass through a general communications network, denoted NG, such as the internet, or a mobile network, or a combination of both, before reaching the last mile concentrator, with one link to the home network NH. The concentrator device, in the example of Fig. 3 being an access node such as a DSL access node or an Optical Line Termination, or a WIMAX ASN gateway etc. has of course a lot of other links to other home networks or CPE networks, which are not shown on the Fig. 3 for ease of explanation, as the example in Fig. 3 will only describe the user control of the own home network applications. The residential gateway , part of the home network and coupled between the end-user devices and the concentrator device is depicted RGW; in the embodiment depicted in Fig. 3 this device does not contribute to the QOEO functions.

The user interface module UI, as well as the Quality control function module QCF of this embodiment of the QOEO may reside on a separate device, such as an intelligent remote control, or a PDA. However in other embodiments it is possible that the UI and QCF functions are integrated in one or more end-user devices. If multiple UI and/or QCF modules are present, they can even work in parallel and show exactly the same information to the user.

In Fig. 3 an embodiment with a single and separate end-user control device, denoted by "control", is shown, which incorporates a single UI and QCF module. The UI module will be able to give e.g. a visualization of these 3 video applications and their relative bandwidth usage. To this purpose the user may request the UI module to display this information. UI will then communicate with the QCF module, which in its turn will get the application information from the 3 applications, residing on the two end-user devices EUD1 and EUD2. These applications will provide this information back to the QCF, which will extract the flow specific information from it, and send this to the flow conditioning function module FCF, in this example residing on the concentrator device, being the access node. The flow conditioning function module FCF further obtains the necessary flow information, provides it back to the quality control function module QCF, which uses this, together with the application information earlier obtained from the application info function module AIF, to provide this to a user-understandable format, for further delivery to the user interface UI.

In case the user might experience some quality of experience problems, e.g. the quality of the first application is decreased due to extra bandwidth consumption by the other two, this user might want to change the relative priorities by inputting these back via the user interface UI to the quality control function module. The latter will communicate this information to the flow conditioning function module FCF in the concentrator device, which will accordingly adapt the flows as requested. In the case of a DSL access multiplexer, this may be done by mapping the flow on another traffic class with a higher or a lower priority compared to the other flows via existing techniques.

All communications between the different modules UI, QCF, AIF and FCF of the quality of experience optimizer are indicated by means of the thick double-sided arrows in Fig. 3. The communications between the applications and the AIF modules are not explicitly shown but are understood to be implicitly present by these modules being represented as collated to each other.

Fig. 4 shows another embodiment, similar to the one of Fig. 3, but wherein the flow conditioning function FCF is now distributed over the two end-user devices EUD1 and EUD2 instead of being centralized in the concentrator device. Only two applications linked to two distinct flows are present in this example. A practical example could be upgrading the priority and reducing the bandwidth by switching from a High Definition video stream (app 2) during a video conferencing session to a standard definition video stream by this application to free resources for another video stream (app1) in case the concentrator would get congested when the flow related to app2 and the other video stream related to app1 need to pass the same uplink from the home network. The user will initially notice a decrease in quality when both services or applications are simultaneously active, and can request to have an overview of the bandwidth consumption of these services. This presentation will then indicate the lack of resources in case both services are simultaneously active, upon which the user can decide to lower the bandwidth consumption of application 2, using the UI to increase the priority of the most important flow and optionally also to decrease the Bandwidth usage of one or more flows to reduce random drop of packets which highly impact the Quality of Experience. The flow conditioning function FCF, now residing on the end-user device where the video conferencing upstream service is initiated, can accordingly influence the flow of this video stream via switching from high definition to low definition, leading to less bandwidth consumption.

For embodiments as these in Fig. 4 the application information functions are generally aware of the capabilities to impact the required resources as the flow conditioning function modules are also residing in the end-user devices. The mechanism to impact the application could be on application level e.g. the application switches gradually to a lower or a higher resolution or switches stepwise from for instance a High Definition to Standard Definition.

The embodiment in Fig. 5 differs from the one in Fig. 3 in that the application information function module AIF is not attached to the applications, but is for instance centralized in the concentrator device, in this case again an access network element. This may for instance be the case for older-type of user end devices which do not support the proposed Quality of experience optimizer modules. For these types of end-user devices many of the quality of experience optimizer functions can then be implemented into a central network element. There are several known ways to provide the application information. A first method can be based on detecting flows using well-known ports. The known port number can be mapped to the matching service name and the IP address to the home device name and/or network server name via for instance reverse DNS lookup. A second method can be via deep packet inspection to retrieve more detailed application level information from selected flows (SIP phone call, HTTP download, Peer-to-Peer network connections, ...).

Another difference of Fig. 5 with respect to Fig. 3 is that the flow control function module FCF is present both in the residential gateway RGW for upstream flow conditioning and in the access node for down-stream flow conditioning. This is depicted in Fig. 5 by means of an upstream flow conditioning function module FCFu and a downstream flow conditioning function module FCFd. The internal communications between the four main modules of the QOEO are also depicted.

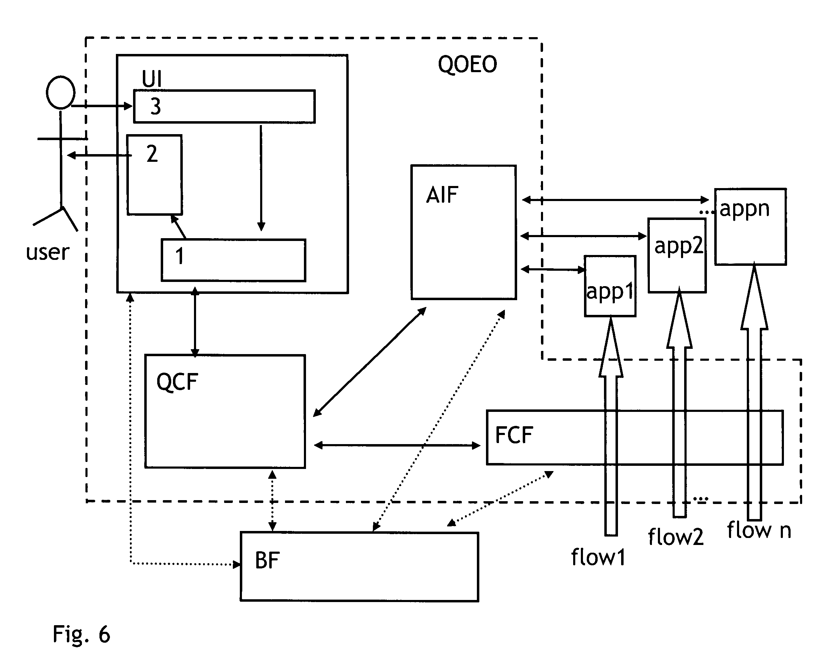

Any of the UI, QCF, AIF or FCF modules of the QOEO can be further connected to a billing function module. This is shown in Fig. 6, depicting the QOEO of Fig. 1, but with further couplings of all main functional parts to a billing function module BF, as indicated by the dotted arrows between BF and UI, AIF, QCF and FCF. Billing information can be retrieved from the QOEO to acknowledge the use of the service, or pricing information can be provided to the QOEO to inform the user of the price to be paid if a QOEO function is used. Apart from retrieving billing information and providing pricing information, also billing control commands can be provided to the QOEO to control the Priority and bandwidth settings, to be used in for instance pre-paid billing mechanisms.

Pricing information is provided to the QCF, which can merge this information with the other information to display by the user interface.

The choice of where to derive information for billing and where to provide billing control commands, will highly depend on who has control over the behaviour of the device/module. Since the modular setup is defined in such a way that multiple device or software vendors can implement the functions, it is important that the party that provides a billed service is assured that the billing information and control commands are correct and that billing can be enforced and cannot be circumvented. The type of info that is retrieved will also depend on what actions/services will be billed.

The billing function provides pricing information to the QOEO to enable the user to make a funded choice. The billing function can pass the difference in price between e.g. a HD or a SD video quality offering, can pass the cost of a temporary bandwidth upgrade to allow for an extra service, ... Note that the billing function can also pass information to the QOEO function to disallow or allow its usage based on service subscription by the user, status of the account (bills paid or not). It can also be used to reduce/increase the price for the content based on the quality that it is consumed. Furthermore the flow can be changed by the QCF, based on this billing information. In addition billing information related to the requested flow bandwidth and priority level on the delivery network, to charge for the volume and priority level of flows can be retrieved as well as billing information related to per usage info of the QOEO function or any of its modules to bill the usage of the function(s). Pricing information can be provided related to the cost for using options in the QOEO functions. Also billing control commands may be provided to control/enforce/restrict the settings of the QOEO.

The QOEO provides billing info to the billing function to adapt the billing when a service is downgraded or upgraded in terms of Quality of Experience or extra bandwidth.

In yet other embodiments a QOEO further is adapted to ensure a secure operation of its function taking into account that multiple users can make use of the same subscription. This security function has multiple aspects, among which we can mention control of the right to use the QOEO device at all, of the right to use the QOEO for certain services, of the right to impact the quality of experience of an other user, of the right to supersede a quality of experience related decision of other members, of the right to impact the bill of the subscriber, of the right to access (Read or write) the access rights for the individual users.

While the principles of the invention have been described above in connection with specific apparatus, it is to be clearly understood that this description is made only by way of example and not as a limitation on the scope of the invention, as defined in the appended claims.

## Claims

1. Method for dynamically controlling the quality of a plurality of applications (app1,app2,...,appn) available to an end-user via a communications network, said method including a step of collecting information related to the actual status of said applications and of the flows (flow1,flow2,...,flown) associated to said applications, a step of reporting the actual status of said applications and of said associated flows via a user interface (UI) to said user, a step of communicating by said user via said user interface (UI), a desired relative priority of at least one of said applications, and a step of changing the flow of said at least one of said applications in accordance with said desired relative priority.

2. Method according to claim 1, wherein said step of changing the flow of said at least one of said applications is further performed in accordance with another criterion related to billing.

3. Method according to claim 2 wherein billing information is retrieved from a network content provider as information related to the actual consumed applications.

4. Method according to any of the previous claims 1 to 3 further including an additional step of providing information related to the changed flow of said at least one of said applications to a billing function.

5. Quality of experience optimizer (QOEO) for dynamically controlling the quality of a plurality of applications (app1,app2,...,appn) available to an end user via a communications network (GN), said optimizer (QOEO) being adapted to collect information from said applications (app1,app2,...,appn) related to the actual status of said applications and of the flows (flow1,flow2,...,flown) associated to said applications, to report the actual status of said applications and said associated flows via a user interface (UI) of said optimizer (QOEO) to said user, to accept inputs from said user concerning a desired relative priority of at least one of said applications, and to change the flow of said at least one of said applications in accordance with said desired relative priority.

6. Quality of experience optimizer (QOEO) in accordance to claim 5 **characterized in that** said optimizer (QOEO) includes a quality control function module (QCF) for processing the collected information related to the actual status of said applications into a format which is understandable by said user such as to provide this information towards said user-interface for further reporting to said user, said quality control function module (QCF) being further adapted to calculate from said inputs from said user control parameters for delivery to a flow conditioning function module (FCF) included in said optimizer (QOEO).

7. Quality of experience optimizer (QOEO) according to claim 6 wherein said quality control function module (QCF) is further adapted to calculate said control parameters from said information from said applications.

8. Quality of experience optimizer (QOEO) in accordance to claim 6 or 6 wherein said flow conditioning function module (FCF) is adapted to change the flow of said at least one of said applications.

9. Quality of experience optimizer (QOEO) in accordance with claims 5-8 including a application information function (AIF) module for obtaining said information from said applications, and for communicating said information to said quality control function module (QCF).

10. Quality of experience optimizer (QOEO) in accordance with any of the previous claims 5 to 9 wherein said user interface module (UI), said quality control function module (QCF), said application information function module (AIF) and said flow conditioning function module (FCF) are distributed or replicated amongst several physical devices.

11. Quality of experience optimizer (QOEO) according to any of the previous claims 5 to 10, being further adapted to determine said control parameters from billing information related to said-applications and said user.

12. Quality of experience optimizer (QOEO) according to any of the previous claims 5 to 11, being further adapted to provide information related to the changed flow of said at least one of said applications to a billing function (BF).
